# FASCICULE DE BREVET EUROPEEN

(11) **EP 3 650 319 B1**
(45) Date de publication et mention de la délivrance du brevet: **13.04.2022**
(21) Numéro de dépôt: 19208184.2
(22) Date de dépôt: 08.11.2019
(51) Int. Cl.: B62D 21/14, B61D 17/04, B62D 25/00

(54) **STRUCTURE DE CARROSSERIE PERMETTANT LE PASSAGE DE FLUIDE OU DE GAZ SOUS PRESSION ET CAISSE ASSOCIÉE**
KAROSSERIESTRUKTUR, DIE EINEN DURCHGANG VON FLUIDEN ODER UNTER DRUCK STEHENDEM GAS ERMÖGLICHT, UND ENTSPRECHENDER FAHRZEUGAUFBAU
BODYWORK STRUCTURE ALLOWING THE PASSAGE OF FLUID OR PRESSURISED GAS AND ASSOCIATED BODY

(30) Priorité: 12.11.2018 FR 1860430
(43) Date de publication de la demande: 13.05.2020
(73) Titulaire: ALSTOM Transport Technologies, 93400 Saint-Ouen (FR)
(72) Inventeur: LANGLOIS, Francis, 59310 FAUMONT (FR)
(74) Mandataire: Lavoix

(56) Documents cités:
- DE-A1- 2 707 573

## Description

La présente invention concerne une structure de carrosserie pour caisse pour véhicule de transport public, notamment véhicule ferroviaire ou véhicule de transport routier, par exemple de transport routier guidé, comprenant une paroi s'étendant selon une direction longitudinale.

Il est parfois nécessaire de faire circuler de l'air dans un véhicule à travers des conduits pneumatiques, par exemple, afin de distribuer l'énergie pneumatique à différents organes du train tels que des sièges, des portes, des freins, des suspensions et autres accessoires.

A cet effet, on connait actuellement, dans l'état de la technique, des conduits pneumatiques fixés sur une surface de paroi orientée vers l'habitacle de la caisse, par exemple à l'aide de colliers de fixation, pour permettre le passage de fluide ou de gaz.

Cependant, lesdits conduits pneumatiques occupent de l'espace. Des équipements prévus pour équiper la caisse, tels qu'un porte-bagage, ou autres garnissages intérieurs doivent donc contourner lesdits conduits, ce qui est susceptible de compliquer la géométrie desdits équipements, par exemple en y réalisant des dégagements ou en créant des volumes intrusifs vers l'intérieur du véhicule, nuisant à l'habitabilité de la salle voyageurs.

Par ailleurs, la fixation des conduits sur le mur nécessite des étapes supplémentaires d'assemblage lors de la fabrication du véhicule.

Le document DE 27 07 573 A1 décrit une poutrelle en treillis constituée d'au moins deux membrures et de parties latérales contenant des évidements s'étendant entre les membrures. Les parties latérales adjacentes étant reliées entre elles par un assemblage approprié uniquement dans la zone de la membrure.

Un des buts de l'invention est donc de fournir un système adapté pour une caisse permettant le passage d'un fluide ou d'un gaz, dont l'encombrement est réduit et qui ne complexifie pas la fabrication de la caisse.

Dans ce but, l'objet de l'invention est une structure de carrosserie du type précité dans laquelle la paroi délimite au moins une cavité s'étendant selon la direction longitudinale, la cavité délimitant un passage pour un fluide sous pression, par exemple un gaz sous pression.

Les conduits pneumatiques sont ainsi directement formés par la paroi. L'intégration du passage du fluide ou du gaz comprimé dans cette paroi permet de réduire fortement l'encombrement.

Par ailleurs, il est à noter que la réalisation de cavité(s) dans la paroi ne nécessite pas d'opérations supplémentaires à l'usinage de la paroi.

La structure peut en outre présenter une ou plusieurs des caractéristiques ci-dessous, considérée(s) individuellement ou selon toutes les combinaisons techniquement possibles :
- le fluide sous pression a une pression supérieure à 2 × 10⁵ Pa (Pascal) et de préférence comprise entre 5 × 10⁵ Pa et 10 × 10⁵ Pa,
- la paroi est formée d'une seule pièce,
- la paroi présentant une longueur définie dans la direction longitudinale, la cavité s'étend sur toute la longueur de la paroi dans la direction longitudinale,
- la cavité présente un profil constant le long de la direction longitudinale sur toute la longueur de la paroi,
- la paroi délimite une pluralité de cavités, au moins un groupe desdites cavités formant un réservoir de fluide ou de gaz comprimé,
- la paroi comprend une face interne, une face externe et des nervures reliant la face interne et la face externe, chaque cavité étant définie entre la face interne, la face externe et deux nervures adjacentes,
- la structure de carrosserie comprend une pluralité de cavités, chaque cavité étant isolée par rapport à chaque autre cavité, et/ou
- la paroi comprend au moins une ouverture débouchant dans la cavité, une platine de raccordement étant soudée à la paroi de manière à couvrir totalement l'ouverture.

L'invention concerne également une caisse pour véhicule ferroviaire ou véhicule de transport routier guidé, comprenant une structure de carrosserie telle que définie cidessus, la cavité comprenant un fluide ou un gaz sous pression, la paroi délimitant au moins partiellement un habitacle de la caisse.

La caisse peut en outre être telle que la cavité est pourvue à une extrémité d'au moins un élément de raccordement et/ou au moins un élément de distribution et/ou au moins un bouchon d'extrémité.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en perspective d'un exemple de structure de carrosserie selon un premier mode de réalisation de l'invention,
- la figure 2 est une vue en perspective d'un exemple de structure de carrosserie selon un deuxième mode de réalisation de l'invention, et

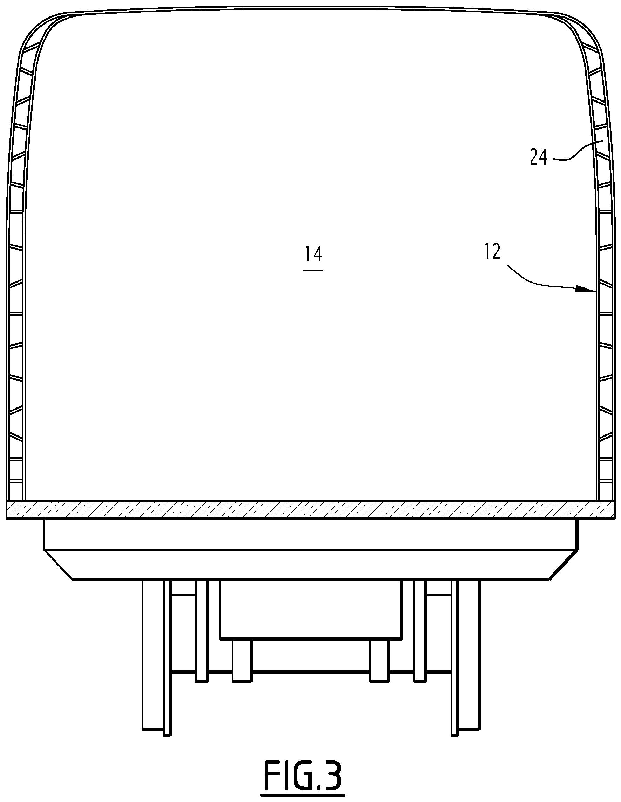

- la figure 3 est une vue schématique en coupe d'une caisse avec une structure de carrosserie selon le premier mode de réalisation.

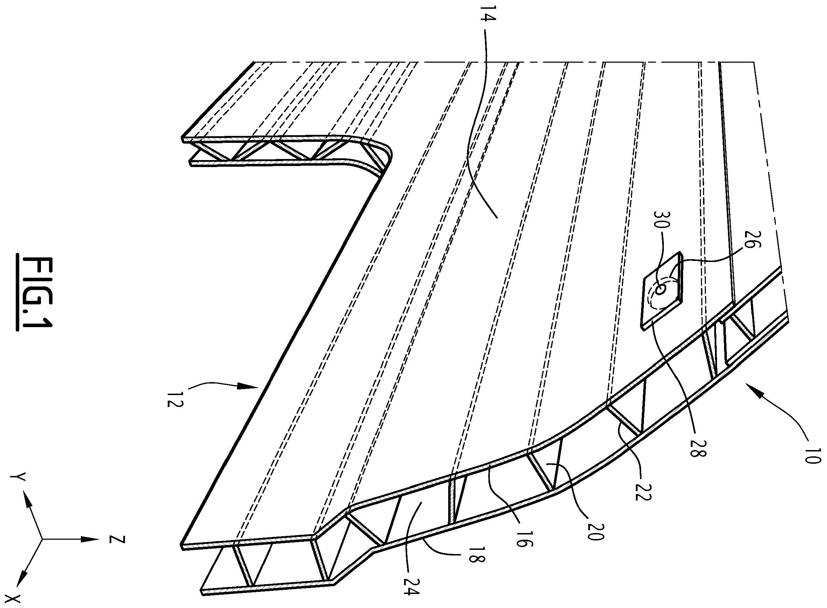

La figure 1 représente une partie d'une structure de carrosserie 10 pour caisse pour véhicule ferroviaire ou véhicule de transport routier, par exemple guidé, selon un premier mode de réalisation de l'invention.

La structure de carrosserie 10 comprend une paroi 12 s'étendant selon une direction longitudinale X.

La direction longitudinale est, par exemple, la direction de déplacement telle que définie usuellement pour un véhicule. On définit, par ailleurs, la direction d'élévation Z comme la direction perpendiculaire au plan de roulement du véhicule et la direction transversale Y comme la direction perpendiculaire aux directions longitudinale X et d'élévation Z.

La paroi 12 est, par exemple, un sous-châssis, un pavillon ou une face de la caisse.

La paroi 12 délimite, par exemple, au moins partiellement un habitacle 14 de la caisse.

La paroi 12 présente une longueur définie dans la direction longitudinale X. Cette paroi 12 s'étend, par exemple, sur toute la longueur de la caisse.

La longueur de la paroi 12 est, par exemple, comprise entre 15 et 20 mètres.

La paroi est formée d'une seule pièce, par exemple par extrusion.

Alternativement, la paroi est formée d'une pluralité de pièces, par exemple réalisées par extrusion, puis assemblées les unes aux autres.

La paroi est par exemple réalisée en aluminium.

La paroi 12 comprend une face interne 16, une face externe 18 et une pluralité de nervures 20, 22 reliant la face interne 16 et la face externe 18. Les nervures 20, 22 peuvent être parallèles entre elles, ou au moins certaines nervures peuvent ne pas être parallèles à d'autres nervures.

La face interne 16 est ici orientée vers l'habitacle 14 et la face externe 18 vers l'extérieur du véhicule.

La paroi 12 délimite au moins une cavité 24, de préférence une pluralité de cavités 24, s'étendant selon la direction longitudinale X. Plus particulièrement, chaque cavité 24 est définie entre la face interne 16, la face externe 18 et deux nervures adjacentes 20, 22.

Chaque cavité 24 s'étend sensiblement sur toute la longueur de la paroi 12 dans la direction longitudinale X.

Chaque cavité 24 s'étend entre deux extrémités selon la direction longitudinale X.

Chaque cavité 24 délimite un passage pour un fluide ou un gaz sous pression.

Le fluide ou gaz sous pression a une pression supérieure à 2 × 10⁵ Pa (Pascal) et de préférence comprise entre 5 × 10⁵ Pa et 10 × 10⁵ Pa.

De telles valeurs permettent notamment le service et le fonctionnement optimaux des équipements à alimenter.

Chaque cavité 24 présente un profil sensiblement constant le long de la direction longitudinale X sur toute la longueur de la paroi.

Plus particulièrement, chaque cavité 24 est un volume ayant pour axe principal un axe parallèle à la direction longitudinale X. Le volume est ici un cylindre. La base du cylindre est ici un polygone, notamment un quadrilatère, correspondant à une coupe perpendiculaire à la direction longitudinale X de la face interne 16, la face externe 18 et des deux nervures adjacentes 20, 22.

Chaque cavité 24 est isolée par rapport à chaque autre cavité. Les nervures 20, 22 sont notamment imperméables aux fluides sous pression circulant dans les cavités 24.

Cela permet notamment de faire circuler différents fluides et/ou gaz dans les différentes cavités.

Alternativement, au moins deux cavités 24 communiquent entre elles.

Dans l'exemple représenté, la paroi 12 comprend au moins une ouverture 26 débouchant dans la cavité 24. L'ouverture 26 est ici une ouverture traversante de la face interne 16.

Une platine de raccordement 28 est assemblée, par exemple par soudure, à la paroi 12 de manière à couvrir totalement l'ouverture 26. Plus particulièrement, la platine de raccordement 28 est assemblée, par exemple par soudure, à la face interne 16 de la paroi 12 depuis l'extérieur de ladite paroi 12, c'est-à-dire du côté de la face interne 16 orienté vers l'habitacle 14.

La platine de raccordement 28 est une plaque pourvue d'un orifice central 30. L'orifice central 30 est, par exemple, raccordé à un conduit pour permettre un passage de fluide ou de gaz de la cavité 24 audit conduit ou inversement.

Avantageusement, la platine de raccordement 28 comprend une vanne permettant de contrôler la quantité de fluide ou de gaz traversant l'orifice central 30.

La platine de raccordement 28 permet, par exemple, de réaliser un piquage de fluide ou de gaz depuis la cavité 24 ou de fournir du gaz ou du fluide dans la cavité 24 à un emplacement intermédiaire entre les deux extrémités de la cavité 24.

La cavité 24 est pourvue à au moins une de ses deux extrémités d'au moins un élément de raccordement et/ou au moins un élément de distribution et/ou au moins un bouchon d'extrémité fermant hermétiquement ladite extrémité.

Plus particulièrement, la cavité 24 est pourvue à chacune de ses deux extrémités d'un élément de raccordement ou d'un élément de distribution ou d'un bouchon d'extrémité.

L'élément de raccordement permet, par exemple, de raccorder ladite extrémité de la cavité 24 à l'extrémité d'une cavité d'une structure de carrosserie d'une caisse adjacente.

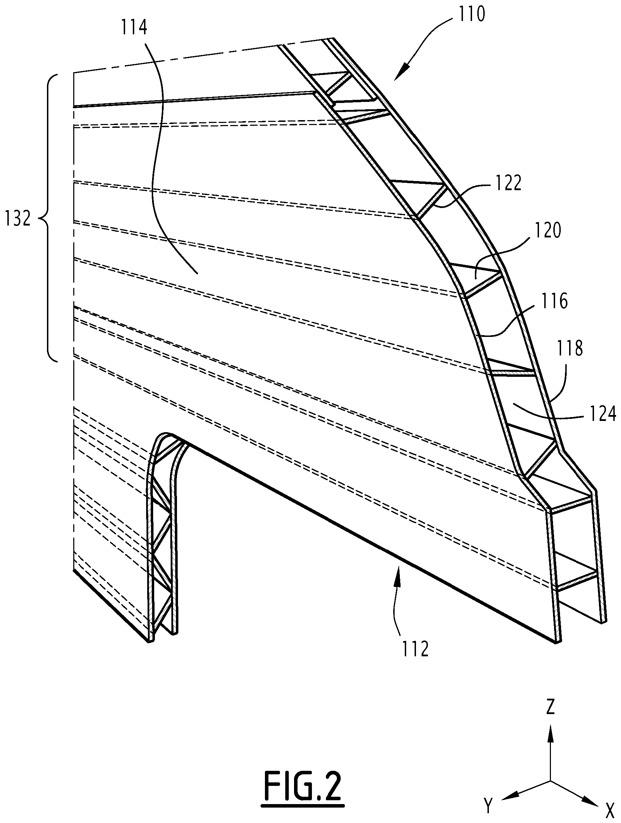

Un deuxième mode de réalisation d'une structure de carrosserie selon l'invention est représenté sur la figure 2.

Seuls les éléments par lesquels le deuxième mode de réalisation diffère du premier mode de réalisation vont être décrits dans la suite de la description.

Les éléments identiques ou similaires auront la référence correspondante du premier mode de réalisation incrémentée de 100.

La paroi 112 délimite plusieurs cavités 124 tel que décrit précédemment.

Au moins un groupe 132 des cavités 124 forme un réservoir de fluide ou de gaz comprimé, c'est-à-dire qu'elles contiennent un même fluide ou un même gaz à une pression nécessaire au service et au fonctionnement optimaux des équipements à alimenter.

La pression est, par exemple, supérieure à 2 × 10⁵ Pa (Pascal) et de préférence comprise entre 5 × 10⁵ Pa et 10 × 10⁵ Pa.

Par exemple, six cavités sont remplies du même fluide ou gaz. L'espace défini par les cavités du groupe représente un volume permettant de remplacer avantageusement un réservoir.

Chaque cavité 124 du groupe 132 est de préférence isolée par rapport à chaque autre cavité de ce groupe 132.

Alternativement, une pluralité des cavités 124 du groupe 132 de cavités 124 communique entre elles pour former un espace commun.

L'intégration du passage du fluide ou du gaz comprimé dans la paroi permet de réduire fortement l'encombrement, cela permettant une intégration plus facile d'éléments additionnels tels que des porte-bagages dans l'habitacle et autres équipements d'aménagement intérieurs.

Des zones techniques préalablement dédiées aux fonctions de stockage sous la forme de réservoir de fluide ou de gaz sont susceptibles d'être libérées. Cela permet notamment de pouvoir améliorer l'habitabilité des trains.

Par ailleurs, cette structure de carrosserie ne nécessite pas de pièces additionnelles pour le passage de fluide ou de gaz, ce qui réduit la masse de la caisse, et ainsi la consommation du véhicule.

De plus, la réalisation de cavité(s) dans la paroi ne nécessite pas d'opérations supplémentaires à l'usinage dudit mur, de sorte que la structure de carrosserie est aisée à produire.

## Revendications

1. Structure de carrosserie (10 ; 110) pour caisse pour véhicule de transport public, notamment véhicule ferroviaire ou véhicule de transport routier, par exemple de transport routier guidé, comprenant une paroi (12 ; 112) s'étendant selon une direction longitudinale (X),
la paroi (12 ; 112) délimitant au moins une cavité (24 ; 124) s'étendant selon la direction longitudinale (X),
**caractérisée en ce que** la cavité (24 ; 124) délimite un passage pour un fluide sous pression, par exemple un gaz sous pression, la paroi (12 ; 112) étant formée d'une seule pièce, la paroi (12 ; 112) comprenant une face interne (16 ; 116), une face externe (18 ; 118) et des nervures (20, 22 ; 120, 122) reliant la face interne (16 ; 116) et la face externe (18 ; 118), chaque cavité (24 ; 124) étant définie entre la face interne (16 ; 116) , la face externe (18 ; 118) et deux nervures adjacentes (20, 22 ; 120, 122).

2. Structure de carrosserie selon la revendication 1, dans laquelle le fluide sous pression a une pression supérieure à 2 × 10⁵ Pa (Pascal) et de préférence comprise entre 5 × 10⁵ Pa et 10 × 10⁵ Pa.

3. Structure de carrosserie selon la revendication 1 ou 2, dans laquelle, la paroi (12 ; 112) présentant une longueur définie dans la direction longitudinale (X), la cavité (24; 124) s'étend sur toute la longueur de la paroi (12 ; 112) dans la direction longitudinale (X).

4. Structure de carrosserie selon la revendication 3, dans laquelle la cavité (24 ; 124) présente un profil constant le long de la direction longitudinale (X) sur toute la longueur de la paroi (12 ; 112).

5. Structure de carrosserie selon l'une quelconque des revendications 1 à 4, dans laquelle la paroi (112) délimite une pluralité de cavités (124), au moins un groupe (132) desdites cavités (124) formant un réservoir de fluide ou de gaz comprimé.

6. Structure de carrosserie selon l'une quelconque des revendications 1 à 5, comprenant une pluralité de cavités (24 ; 124), chaque cavité (24 ; 124) étant isolée par rapport à chaque autre cavité.

7. Structure de carrosserie selon l'une quelconque des revendications 1 à 6, dans laquelle la paroi (12 ; 112) comprend au moins une ouverture (26) débouchant dans la cavité (24 ; 124), une platine de raccordement (28) étant soudée à la paroi (12 ; 112) de manière à couvrir totalement l'ouverture (26).

8. Caisse pour véhicule ferroviaire ou véhicule de transport routier guidé, comprenant une structure de carrosserie (10 ; 110) selon l'une quelconque des revendications 1 à 7, la cavité (24 ; 124) comprenant un fluide ou un gaz sous pression, la paroi (12 ; 112) délimitant au moins partiellement un habitacle de la caisse.

9. Caisse selon la revendication 8, dans laquelle la cavité (24 ; 124) est pourvue à une extrémité d'au moins un élément de raccordement et/ou au moins un élément de distribution et/ou au moins un bouchon d'extrémité.

## Patentansprüche

1. Karosseriestruktur (10; 110) für einen Wagenkasten für ein Fahrzeug des öffentlichen Verkehrs, insbesondere ein Schienenfahrzeug oder ein Straßentransportfahrzeug, beispielsweise des geführten Straßentransports, umfassend eine Trennwand (12; 112), die sich entlang einer Längsrichtung (X) erstreckt,
wobei die Trennwand (12; 112) mindestens einen Hohlraum (24; 124) begrenzt, der sich entlang der Längsrichtung (X) erstreckt,
**dadurch gekennzeichnet, dass** der Hohlraum (24; 124) einen Durchgang für ein unter Druck stehendes Fluid, beispielsweise ein unter Druck stehendes Gas, begrenzt, wobei die Trennwand (12; 112) einstückig gebildet ist, die Trennwand (12; 112) umfassend eine Innenfläche (16; 116), eine Außenfläche (18; 118) und Rippen (20, 22; 120, 122), die die Innenfläche (16; 116) und die Außenfläche (18; 118) verbinden, wobei jeder Hohlraum (24; 124) zwischen der Innenfläche (16; 116), der Außenfläche (18; 118) und zwei benachbarten Rippen (20, 22; 120, 122) definiert ist.

2. Karosseriestruktur nach Anspruch 1, wobei das Druckfluid einen Druck von mehr als 2 × 10⁵ Pa (Pascal) und vorzugsweise zwischen 5 × 10⁵ Pa und 10 × 10⁵ Pa aufweist.

3. Karosseriestruktur nach Anspruch 1 oder 2, wobei, wenn die Trennwand (12; 112) eine definierte Länge in der Längsrichtung (X) aufweist, sich der Hohlraum (24; 124) über die gesamte Länge der Trennwand (12; 112) in der Längsrichtung (X) erstreckt.

4. Karosseriestruktur nach Anspruch 3, wobei der Hohlraum (24; 124) ein konstantes Profil entlang der Längsrichtung (X) über die gesamte Länge der Trennwand (12; 112) aufweist.

5. Karosseriestruktur nach einem der Ansprüche 1 bis 4, wobei die Trennwand (112) eine Vielzahl von Hohlräumen (124) begrenzt, wobei mindestens eine Gruppe (132) der Hohlräume (124) einen Behälter für ein komprimiertes Fluid oder Gas bildet.

6. Karosseriestruktur nach einem der Ansprüche 1 bis 5, umfassend eine Vielzahl von Hohlräumen (24; 124), wobei jeder Hohlraum (24; 124) von jedem weiteren Hohlraum isoliert ist.

7. Karosseriestruktur nach einem der Ansprüche 1 bis 6, wobei die Trennwand (12; 112) mindestens eine Öffnung (26) aufweist, die in den Hohlraum (24; 124) mündet, wobei eine Verbindungsplatine (28) auf eine Weise an die Trennwand (12; 112) geschweißt ist, dass sie die Öffnung (26) vollständig abdeckt.

8. Wagenkasten für Schienenfahrzeug oder Fahrzeug für geführten Straßenverkehr, umfassend eine Karosseriestruktur (10; 110) nach einem der Ansprüche 1 bis 7, der Hohlraum (24; 124) umfassend ein Fluid oder ein Gas unter Druck, und wobei die Trennwand (12; 112) zumindest teilweise einen Fahrgastraum des Wagenkastens begrenzt.

9. Wagenkasten nach Anspruch 8, wobei der Hohlraum (24; 124) an einem Ende mit mindestens einem Verbindungselement und/oder mindestens einem Verteilungselement und/oder mindestens einem Endstopfen versehen ist.

## Claims

1. Bodywork structure (10; 110) for a body for a public transport vehicle, in particular a railway vehicle or a road transport vehicle, for example a guided road transport vehicle, comprising a wall (12; 112) extending in a longitudinal direction (X),
the wall (12; 112) comprising at least one cavity (24; 124) extending in the longitudinal direction (X),
**characterized in that** the cavity (24; 124) provides a passage for a fluid under pressure, for example a gas under pressure, the wall (12; 112) being formed in one piece, the wall (12; 112) comprising an inner face (16; 116), an outer face (18; 118) and ribs (20; 22, 120, 122) connecting the inner face (16; 116) and the outer face (18; 118), each cavity (24; 124) being defined between the inner face (16; 116), the outer face (18; 118) and two adjacent ribs (20, 22; 120, 122).

2. Bodywork structure according to claim 1, wherein the pressurized fluid has a pressure greater than 2 × 10⁵ Pa (Pascal) and preferably between 5 × 10⁵ Pa and 10 × 10⁵ Pa.

3. Bodywork structure according to claim 1 or 2, wherein, the wall (12; 112) having a length in the longitudinal direction (X), the cavity (24; 124) extends over the entire length of the wall (12; 112) in the longitudinal direction (X).

4. Bodywork structure according to claim 3, wherein the cavity (24; 124) has a constant profile over the entire length of the wall (12; 112) in the longitudinal direction (X).

5. Bodywork structure according to any one of claims 1 to 4, wherein the wall (112) comprises a plurality of cavities (124), at least one group (132) of said cavities (124) forming a fluid or compressed gas reservoir.

6. Bodywork structure according to any one of claims 1 to 5, comprising a plurality of cavities (24; 124), each cavity (24; 124) being insulated from each other cavity.

7. Bodywork structure according to any one of claims 1 to 6, wherein the wall (12; 112) comprises at least one opening (26) into the cavity (24; 124), and wherein a connecting plate (28) is welded to the wall (12; 112) in order to completely cover the opening (26).

8. Body for a railway vehicle or guided road transport vehicle, comprising a bodywork structure (10; 110) according to any one of claims 1 to 7, the cavity (24; 124) comprising a fluid or a gas under pressure, while the wall (12; 112) at least partially defines a vehicle interior of the body.

9. Body according to claim 8, wherein the cavity (24; 124) is provided at one end with at least one connecting element and/or at least one distribution element and/or at least one end plug.
